Europäisches Patentamt

European Patent Office

Office européen des brevets

Numéro de publication: **0 367 687**

**A1**

## DEMANDE DE BREVET EUROPEEN

Numéro de dépôt: **89420398.3**

Date de dépôt: **17.10.89**

Int. Cl.⁵ **B29C 65/04 , B29C 59/02 , //B29K69:00**

Priorité: **18.10.88 FR 8814222**

Date de publication de la demande: **09.05.90 Bulletin 90/19**

Etats contractants désignés: **ES**

Demandeur: **KODAK-PATHE**
**26, rue Villiot**
**F-75594 Paris Cedex 12(FR)**

Inventeur: **Delmar, Jean-Claude Hugues Louis**
**Kodak-Pathe Zone Industrielle**
**F-71102 Chalon Sur Saone Cedex(FR)**
Inventeur: **Schmuckle, Christian Serge Emile**
**Kodak-Pathe Zone Industrielle**
**F-71102 Chalon Sur Saone Cedex(FR)**

Mandataire: **Buff, Michel**
**Kodak-Pathé Département des Brevets et Licences CRT Centre de Recherches et de Technologie Zone Industrielle**
**F-71102 Chalon sur Saône Cédex(FR)**

### Procédé de soudage de polycarbonate par haute fréquence.

L'invention concerne un procédé de soudage de feuilles thermosoudables dont une au moins est en polycarbonate.

Le procédé est caractérisé en ce que les feuilles à souder sont séparées des électrodes métalliques (4), (5) de la presse à haute fréquence par une plaque de verre (2), (3).

Application à la fabrication de cartes magnétiques à haute densité.

FIG. 1

## PROCEDE DE SOUDAGE DE POLYCARBONATE PAR HAUTE FREQUENCE

L'objet de la présente invention est un procédé de soudage par haute fréquence de feuilles entre elles dont l'une au moins est en polycarbonate.

Dans la technique antérieure, il est connu de souder des feuilles de polycarbonate entre elles, la méthode la plus couramment utilisée consistant à combiner les effets de la chaleur et de la pression. Par cette méthode, on introduit le sandwich formé des différentes feuilles à souder dans une presse thermique. La température doit être supérieure à la température de transition vitreuse de la substance plastique et généralement cette température est comprise entre 160°C et 180°C. La pression appliquée varie entre 100 et 1000 N/cm². En raison des temps de montée en température et de refroidissement sous pression, le temps nécessaire pour réaliser le soudage de ces plaques de polycarbonate est généralement compris entre 40 et 45 mn.

De même, dans la technique antérieure, il est connu d'utiliser la haute fréquence pour réaliser le soudage de certains matériaux.

La soudure haute fréquence résulte de l'échauffement de la matière à souder par application d'une tension alternative haute fréquence d'amplitude élevée. Pour être soudable par haute fréquence une matière plastique doit avoir un caractère dipolaire permanent et doit être constitué de chaines moléculaires mobiles pouvant osciller, cette mobilité dépendant de nombreux paramètres et notamment des conditions de fabrication, de la plastification interne et externe, de la température, de la fréquence et de l'amplitude de la haute fréquence. C'est ainsi que le PVC est un matériau particulièrement adapté pour être soudé par haute fréquence. Ce soudage est effectué entre deux électrodes métalliques que l'on maintient en pression pendant l'application de la haute fréquence. Or, des essais ont montré qu'une telle technique ne pouvait pas s'appliquer pour du polycarbonate, une raison étant que la température d'amorçage de la réaction pour du polycarbonate est trop élevée (de l'ordre de 100°C ou plus).

Ainsi, le brevet US 4 678 713 montre que le polycarbonate fait partie de cette catégorie de matériaux qui ne sont pas soudables par haute-fréquence. En réalité, selon ce brevet la soudure du polycarbonate implique l'utilisation d'une couche adhésive formée de polymères contenant du monoxyde de carbone.

De même, la demande JP-A-55 150 321 montre également que le polycarbonate fait partie des matériaux à faible facteur de dissipation diélectrique qui ne peuvent, seuls, être soudés diélectriquement. Aussi, on ajoute à ces matériaux une couche d'une résine plastique à fort facteur de dissipation diélectrique permettant aux matériaux à faible facteur de dissipation de pouvoir être soudés par haute fréquence.

Aussi l'invention a-t-elle pour objet un procédé de soudage de feuilles de polycarbonate dans un temps nettement inférieur à celui obtenu par les procédés de la technique antérieure.

C'est encore un autre objet de la présente invention que de pouvoir permettre le soudage par hautre fréquence de feuilles de polycarbonate entre elles sans utiliser de feuilles supplémentaires formant adhésif.

D'autres objets de la présente invention apparaîtront dans la description plus détaillée qui va suivre.

L'invention concerne un procédé de soudage de feuilles plastiques thermosoudables dont au moins une est en polycarbonate et dans lequel :

1) on superpose les feuilles à souder entre elles,

2) on introduit le sandwich ainsi réalisé entre les deux électrodes métalliques d'une presse à haute fréquence,

3) on met sous pression et on applique une fréquence dont la valeur est appropriée pour exciter les liaisons moléculaires des matériaux formant lesdites feuilles thermosoudables, lesdites pressions et fréquences étant appliquées au travers d'une plaque de verre,

4) on refroidit.

La description qui suit est faite en faisant référence aux dessins dans lesquels :

La figure 1 représente de façon schématique le dispositif général de mise en oeuvre du procédé selon l'invention.

La figure 2 représente de manière schématique un mode de réalisation d'un dispositif de mise en oeuvre du procédé selon l'invention pour la fabrication de cartes magnétiques à haute densité.

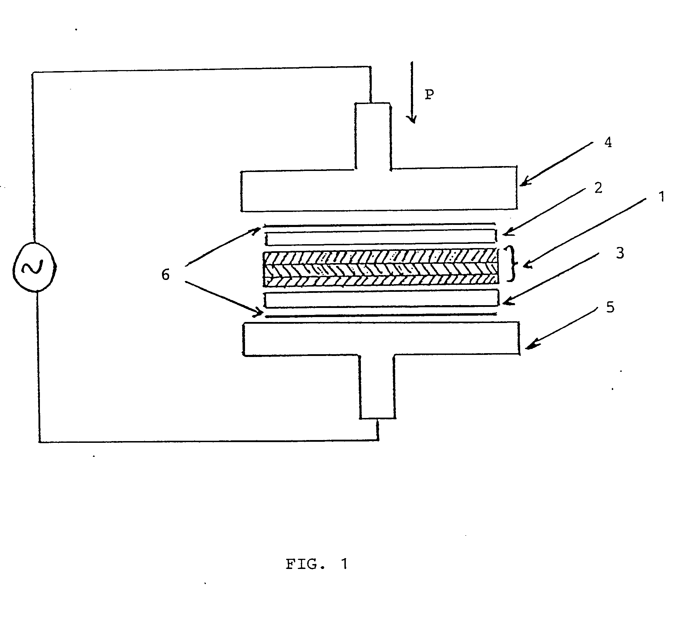

On fait maintenant référence à la figure 1 représentant de façon schématique le dispositif général de mise en oeuvre du procédé selon la présente invention.

On superpose tout d'abord les feuilles à souder entre elles de manière à réaliser un "sandwich" (1). Ce sandwich (1) peut être composé uniquement de feuilles de polycarbonate ou bien composé de feuilles de polycarbonate mélangées avec des feuilles d'un autre matériau tel que du PVC par exemple.

Le sandwich ainsi réalisé est alors placé de préférence entre deux plaques de verre (2), (3), mais en réalité il suffit que l'une des faces du sandwich soit au contact d'une plaque de verre. Ce verre doit présenter certaines caractéristiques ; il doit en effet être capable de résister aux chocs thermiques ainsi qu'à la compression. On peut à cet effet utiliser un verre trempé ou une vitro-céramique du type : vision de Corninge®. L'épaisseur des plaques varie en fonction de l'épaisseur des couches à assembler et peut être de l'ordre de 2 à 5 mm.

L'ensemble formé du sandwich de polycarbonate entouré des deux plaques de verre est alors placé entre les machoires (4), (5) de la presse constituées par deux pavés métalliques. Ces deux pavés métalliques jouent en même temps le rôle des électrodes pour l'application de la haute fréquence.

Dans un mode de réalisation préféré de la présente invention, on dispose une feuille (6) d'un matériau souple, ne réagissant pas à la haute fréquence, entre les plaques de verre et le métal formant chaque électrode afin d'absorber les défauts dus à une mauvaise planéité de la surface des électrodes ou de la surface des plaques de verre, en contact avec l'électrode métallique. En effet, en raison de la pression exercée, il est absolument indispensable qu'il n'y ait aucune force de flexion qui s'exerce sur les plaques de verre lorsque celles-ci sont en pression. A titre d'exemple on pourra utiliser du carton ou du Téflon®.

Ensuite lorsque l'ensemble est ainsi disposé, on établit la pression (comprise entre 100 et 1000 N/cm²) et on effectue le soudage par application d'une haute fréquence. La haute fréquence doit avoir une valeur apte à exciter les liaisons moléculaires du polycarbonate et est généralement comprise entre 25 et 30 MHz et de préférence 27,12 MHz. Dans ces conditions, le temps d'application de la haute fréquence peut être de l'ordre de 5 à 20 s et est en général inférieur à 10 s. Après cela, il est nécessaire d'attendre le refroidissement de l'ensemble avant de séparer le sandwich de polycarbonate des plaques de verre.

Dans un mode de réalisation préféré, le refroidissement s'effectue en maintenant le sandwich sous pression. En effet on a observé que, lorsque l'on supprime la pression existant pendant l'application de la haute fréquence, on obtient des défauts, tels que des bulles par exemple, qui peuvent être gênants pour certaines applications.

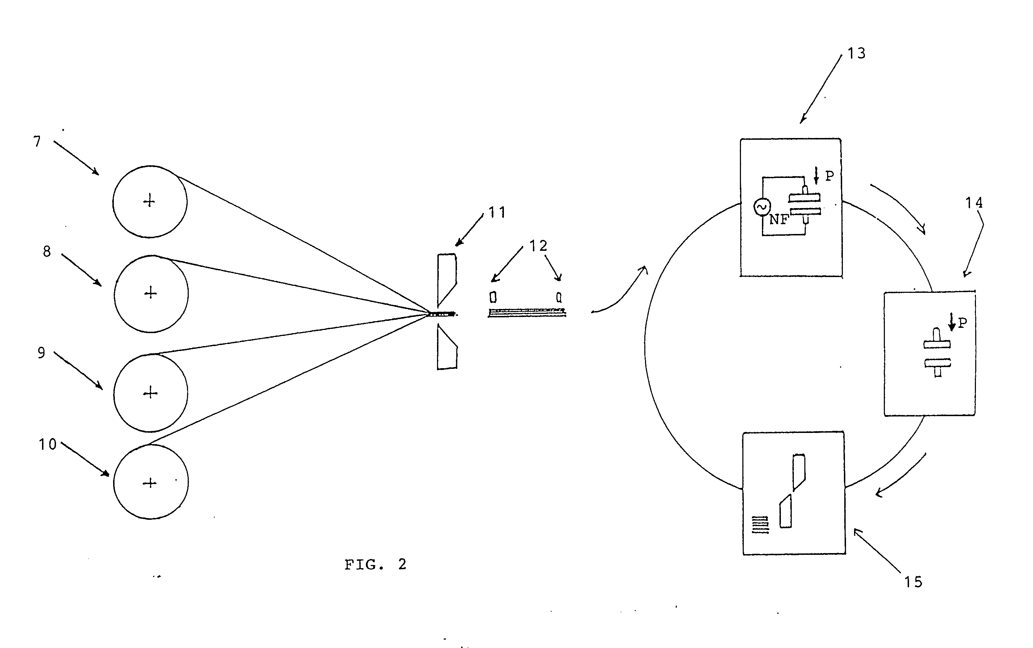

On fait maintenant référence à la figure 2 qui illustre de manière schématique un exemple de dispositif de mise en oeuvre du procédé pour la fabrication de cartes magnétiques à haute densité.

La carte magnétique que l'on souhaite réaliser est une carte magnétique à haute densité constituée d'un support semi-rigide et stable en dimension portant sur la majeure partie d'au moins une de ses surfaces un milieu d'enregistrement magnétique formé de particules magnétiques. Le support de la carte et le milieu magnétique lui-même doivent posséder une déformation élastique, c'est-à-dire, pouvoir retrouver leur forme initiale, même après des courbures répétées. La carte doit en outre être thermiquement stable pour supporter sans déformation les températures courantes de l'environnement. Pour ces raisons, on a choisi de réaliser cette carte en polycarbonate à partir de plusieurs couches superposées.

Cette carte se compose donc d'un nombre de feuillets de polycarbonate compris entre 2 et 10 de manière à réaliser un sandwich dont l'épaisseur est comprise entre 400 $\mu$m et 1000 $\mu$m, l'un de ces feuillets au moins supportant une couche magnétique. Ces feuillets de polycarbonate peuvent, à titre d'exemple, être en LEXA-®(fabriqué par General Electric Co). L'épaisseur de chaque feuillet varie entre 25 et 200 $\mu$m. En fait on constate une meilleure soudabilité dans le cas de feuilles minces que dans le cas de feuilles plus épaisses, une raison étant que, plus les feuilles sont minces, plus les pertes calorifiques par conduction à travers les électrodes seront importantes : ceci implique une plus grande quantité d'énergie requise pour souder des feuilles de faible épaisseur.

La couche magnétique est, elle aussi, enduite sur un support de polycarbonate dont l'épaisseur varie entre 25 et 75 $\mu$m. L'épaisseur de la couche magnétique est de l'ordre de 5 $\mu$m.

Dans le cas de notre exemple représenté en figure 1, on réalise la carte à partir de 4 couches de polycarbonate (7), (8), (9), (10), incluant celle qui supporte la couche magnétique.

Par des dispositifs d'alimentation en rouleau, des dispositifs d'entraînement, de guidage et de centrage des bandes, on amène les bandes à se superposer parfaitement entre elles. On réalise alors, par des moyens appropriés (11), un Premier découpage de façon à avoir un sandwich ayant la surface nécessaire pour réaliser 3 cartes (ou plus suivant les dimensions de la presse). Afin de maintenir les différentes couches parfaitement superposées, on réalise une première soudure (12) en chaque coin du sandwich. Cette soudure peut être réalisée par exemple au moyen d'ultra-sons. On introduit alors le sandwich dans un dispositif à plusieurs postes comprenant essentiellement une presse permettant d'appliquer la haute fréquence (13), une presse munie d'un circuit de refroidissement (14) et un dispositif de découpage des cartes individuelles (15).

Le sandwich passe en premier entre les mâchoires de la presse (13) permettant d'appliquer la haute fréquence. Sur chaque mâchoire de ladite presse, on dispose une plaque de verre dont l'épaisseur est de l'ordre de 5 mm. On établit alors la pression et enfin on soude en appliquant la haute fréquence.

Dans notre mode de réalisation, les conditions opératoires sont les suivantes :
- Surface du sandwich à souder : 200 mm x 90 mm
- Puissance de la presse : 6 KW
- Fréquence HF : 27,12 MHz.
- Pression sur le sandwich : 100 à 200 N.cm²
- Intensité fournie par le générateur : 1,5 A
- Temps d'application de la HF : ≃ 10 s.

Après cela, avant de pouvoir libérer le sandwich, il faut le refroidir ; en effet, la température de soudage doit être supérieure à la température de transition vitreuse du polycarbonate et est généralement comprise entre 130 et 190°C. Ce refroidissement, en raison de la planéité des surfaces requise pour une telle application, est fait en maintenant la pression utilisée lors du soudage. Cela peut être réalisé dans la presse que l'on utilise pour le soudage. Il faut compter alors environ 30 s pour redescendre à la température souhaitée (environ 30 à 35°C). Dans notre mode de réalisation, afin de libérer plus rapidement la presse à haute fréquence, on prévoit une autre presse (14) munie d'un circuit de refroidissement, un système approprié étant prévu pour assurer le transfert du sandwich sous pression dans ladite presse de refroidissement.

Lorsque la température souhaitée est atteinte, on évacue le sandwich vers un poste de découpe (15) où l'on réalise alors les cartes individuelles.

Selon un mode de réalisation préféré, avant d'introduire le sandwich entre les machoires de la presse à haute fréquence, on le fait passer dans un dispositif de préchauffage. Il peut s'agir à titre d'exemple d'une presse thermique dont les machoires supérieure et inférieure sont portées à une température supérieure à 100°C et de préférence de l'ordre de 150°C. Dans un mode de réalisation, la durée de ce préchauffage sera comprise entre 5 et 10s. En fait ce préchauffage permettra au polycarbonate de réagir plus rapidement au poste suivant lorsqu'il sera soumis à la haute fréquence. En effet, les pertes diélectriques du matériau qui lui permettent de s'échauffer sous l'effet de la haute fréquence sont très faibles en dessous d'une certaine température (pour le polycarbonate, cette température est de l'ordre de 100°C) et augmentent rapidement au dessus de cette température. Ce système de préchauffage thermique effectué sur un premier poste (non représenté) permet un gain de temps important lorsque l'on passe au poste de soudage par haute fréquence.

Ce dispositif à postes successifs permet ainsi de fabriquer de telles cartes en série et d'une manière complètement automatisée.

De plus, ce dispositif de soudage par l'intermédiaire de plaques de verre présente un avantage supplémentaire dans le cas de supports magnétiques à haute densité. En réalité, pour de tels supports magnétiques, il est nécessaire d'avoir une couche magnétique à surface extrêmement lisse et unie. En effet, la rugosité et l'ondulation de la surface de la couche provoquent, aux têtes d'enregistrement et de lecture en contact direct avec ladite couche magnétique, des effets de distance qui se traduisent par une modulation de l'amplitude ou une fluctuation du niveau des signaux enregistrés ou lus, diminuant ainsi le rapport signal/bruit obtenu. Or, lorsque l'on réalise le soudage des couches de polycarbonate directement sur des surfaces métalliques, on obtient une rugosité arithmétique qui est de l'ordre de 20 nm, alors qu'en intercalant une plaque de verre poli entre l'électrode métallique et la couche magnétique, on obtient une rugosité qui est de l'ordre de 4 à 5 nm. On obtient ainsi une amélioration de l'état de surface de la couche magnétique, qui, dans la technique antérieure, est obtenu par une opération supplémentaire de calandrage.

## Revendications

1 - Procédé de soudage de feuilles plastiques thermosoudables dont au moins une est en polycarbonate et dans lequel :

1) on superpose les feuilles à souder entre elles,

2) on introduit le sandwich ainsi réalisé entre les deux électrodes métalliques d'une presse à haute fréquence,

3) on met sous pression et on applique une fréquence dont la valeur est appropriée pour exciter les liaisons moléculaires des matériaux formant lesdites feuilles thermosoudables, lesdites pressions et fréquences étant appliquées au travers d'une plaque de verre,

4) on refroidit,

2 - Procédé de soudage selon la revendication 1, caractérisé en ce que, avant d'introduire le sandwich à l'intérieur de la presse à haute fréquence, on réalise un préchauffage dudit sandwich.

3 - Procédé de soudage selon la revendication 2, caractérisé en ce que la température de préchauffage est de l'ordre de 150°C.

4 - Procédé selon l'une quelconque des revendications 1 à 3, caractérisé en ce que le refroidissement après soudage s'effectue en maintenant le sandwich sous pression.

5 - Procédé selon l'une quelconque des revendications 1 à 4, caractérisé en ce que l'on dispose une feuille d'un matériau souple entre les électrodes métalliques et lesdites plaques de verre.

6 - Procédé selon l'une quelconque des revendications 1 à 5, caractérisé en ce que l'une au moins des feuilles réalisant le sandwich supporte une couche magnétique.

7 - Procédé selon l'une quelconque des revendications 1 à 6. caractérisé en ce que la fréquence utilisée est de 27, 12 MHz.

8 - Procédé selon l'une quelconque des revendications 1 à 7. caractérisé en ce que l'on refroidit sous une presse différente de celle utilisée lors du soudage.

9 - Procédé selon l'une quelconque des revendications 1 à 8, caractérisé en ce que l'épaisseur des plaques de verre est comprise entre 2 et 5 mm.

10 - Procédé selon l'une quelconque des revendications 1 à 9, caractérisé en ce que la pression appliquée est comprise entre 100 et 1000 N/cm$^2$.

FIG. 1

FIG. 2

EP 0 367 687 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | US-A-4 678 713  (LANCASTER et al.) * Colonne 1, ligne 66 - colonne 2, ligne 4; colonne 7, ligne 28 - colonne 8, ligne 31 * | 1-5,7-10 | B 29 C   65/04 B 29 C   59/02 // B 29 K   69/00 |
| D,X | JAPANESE PATENTS GAZETTE, semaine D05, 11 mars 1981, section CH, classe A, page 2, résumé no. 06553, Derwent Publications Ltd, Londres, GB; & JP-A-55 150 321 (SUMITOMO BAKELITE K.K.) 22-11-1980 * Résumé * | 1-5,7-10 | |
| A | FR-A-2 120 070  (PPG INDUSTRIES) * Page 1, ligne 30 - page 2, ligne 8; page 2, ligne 29 - page 3, ligne 5; page 16, lignes 8-14; exemple 3 * | 1-5,7-10 | |
| A | JAPANESE PATENTS GAZETTE, semaine 8732, 23 septembre 1987, section CH, classe A, page 26, résumé no. 87-225838/32, Derwent Publications Ltd, Londres, GB; & JP-A-62 151 323 (NIPPON SHIGYO K.K.) 06-07-1987 | 1 | |
| A | DE-B-2 312 629  (HASSIA VERPACKUNG) * Colonne 2, lignes 11-15 * | 1 | |

DOMAINES TECHNIQUES
RECHERCHES (Int. Cl.5)

B 29 C

Le présent rapport a été établi pour toutes les revendications

| Lieu de la recherche | Date d'achèvement de la recherche | Examinateur |
|---|---|---|
| LA HAYE | 02-02-1990 | ATTALLA G. |